# EUROPÄISCHE PATENTSCHRIFT

(11) **EP 2 946 653 B1**
(45) Veröffentlichungstag und Bekanntmachung des Hinweises auf die Patenterteilung: **21.03.2018**
(21) Anmeldenummer: 14001755.9
(22) Anmeldetag: 19.05.2014
(51) Int. Cl.: A01D 78/16

(54) **Schwader, insbesondere Sternradschwader**
Swather, in particular star wheel swather
Andaineur, notamment râteau-soleil

(43) Veröffentlichungstag der Anmeldung: 25.11.2015
(73) Patentinhaber: Knüsel, Josef, 6403 Küssnacht am Rigi (CH)
(72) Erfinder: Knüsel, Josef, 6403 Küssnacht am Rigi (CH)
(74) Vertreter: Reb, Carina

(56) Entgegenhaltungen:
- DE-U1- 8 424 653
- FR-A- 1 251 791
- FR-A- 1 434 370
- GB-A- 804 345
- US-A- 2 827 754
- US-A- 2 988 865
- US-A- 3 015 201

## Beschreibung

Die vorliegende Erfindung betrifft einen Schwader, also ein landwirtschaftliches Gerät zum Sammeln bzw. Zusammenfassen von geschnittenem Futtergut wie z.B. Gras, Silage, Heu, Stroh usw. und zum Ablegen in meist parallel angehäuften Reihen, den sogenannten Schwaden. Diese können dann mit einer Ballenpresse, einem Feldhäcksler oder einem Ladewagen aufgenommen werden. Außerdem wird das Futter bzw. Anwelkgut auch abends in diese Form gebracht, damit es vor dem nächtlichen Tau besser geschützt wird und der Boden morgens besser abtrocknen kann, bevor das Halmgut anschließend wieder mit einem Heuwender gleichmäßig verteilt wird, damit es weitertrocknen kann.

US-A-3015201 offenbart einen Sternradschwader gemäß dem Oberbegriff des Anspruchs 1.

Es gibt unterschiedliche Bauarten von Schwadern, wobei sogenannte Kreiselschwader die am häufigsten verbreiteten sind. Sie besitzen einen oder mehrere horizontale Kreisel mit 6 bis 16 Zinkenarmen, die über die Zapfwelle oder die Hydraulikanlage des Traktors angetrieben werden. Im Falle von mehreren Kreiseln erfolgt der Antrieb simultan und mit identischem Drehmoment und mit identischer Drehzahl an allen Kreiseln. Unter bestimmten Einsatzbedingungen kann dieses einen Nachteil darstellen.

Sternradschwader haben 3-20 Zinkenräder, eben Sternräder genannt, die bodengetrieben sind, indem der Traktor sie frei laufend über den Boden zieht. Bei diesem Schwadertyp ist es vorteilhaft, dass sich die Sternräder dem Boden gut anpassen und insbesondere leichteres Erntegut sehr schonend behandelt wird. Weitere Vorteile sind der nur geringe Verschmutzungsgrad des Ernteguts mit Erde und die hohe Arbeitsleistung aufgrund hoher Arbeitsgeschwindigkeit. Nachteilig allerdings ist bei Sternradschwadern die schlechtere Eignung für schweres oder nasses Mähgut und die generelle Neigung, das Schwadgut zu einem Zopf zu verflechten, was die spätere Aufnahme deutlich erschwert.

Weitere bauartbedingte Nachteile von Sternradschwadern zeigen sich insbesondere in hügeligem Gelände oder Hanglagen. Dadurch, dass die Sternräder bodengetrieben laufen, liegt ihre optimale Arbeitsleistung bei einem guten Mittelwert zwischen zu geringem Vortrieb, was wiederum geringer oder zu geringer Rotationskraft entspricht, und zu hohem Vortrieb, was zwar hohe Rotationskraft ergibt, aber wegen zu großer Wegzurücklegung wiederum ineffizient ist. Jedenfalls liegt dieser optimale Vortrieb der Sternräder, sprich die Fahrtgeschwindigkeit des meist ziehenden Traktors, beträchtlich hoch. Für hügeliges Gelände oder Hanglagen, vielleicht noch rutschige, oft zu hoch. Der Landwirt bzw. Fahrer des Traktors verlangsamt dann die Fahrtgeschwindigkeit, handelt sich aber dadurch zwangsläufig eine Verschlechterung der Arbeitsleistung der Sternräder ein.

Ein weiterer Nachteil in der Anwendung von Sternradschwadern kann in Hanglagen auftreten, wenn beispielsweise die erste, oberste Schwade hangaufwärts gelegt werden soll, weil man die Fahrt mit dem Traktor im allerhöchsten und steilsten Gelände vermeiden will. Hangaufwärts nämlich arbeiten die herkömmlichen Sternradschwader weniger gut.

Weiterhin werden die herkömmlichen Sternradschwader vom vorausfahrenden Traktor gezogen. Der Traktor fährt also über das ausgebreitete Futter drüber. Dieses ist für das Futter unter Umständen von Nachteil, wenn der Druck der Traktorreifen es mit feuchter Erde vermischt oder in sie hineindrückt. Außerdem ist es eventuell von Nachteil für die Arbeitseffizienz der Sternräder oder einer anschließenden Aufnahme, weil das Futter durch die Last des Traktors zusammen- und auf den Boden angepresst ist.

Dadurch, dass bei herkömmlichen Sternradschwadern die Sternräder freilaufend bodengetrieben sind, benötigen sie einen relativ großen Anstellwinkel, damit ihr Ziehen über den Boden auch in eine Drehung umgesetzt wird. Dieser Anstellwinkel wird üblicherweise erreicht, indem der oder die Querträger des Sternradschwaders schräg oder V-förmig angeordnet sind, was wiederum zu Lasten der maximalen möglichen Arbeitsbreite geht.

Des Weiteren gibt es noch Bandrechschwader, Rotorschwader, Pick-Up-Bandschwader und Trommelschwader, denen aber allen gemeinsam ist, dass eine einzige, angetriebene Aufnahme-, Zinken- oder vielmehr Rechenvorrichtung vorgesehen ist. Gegenstand der vorliegenden Patentanmeldung ist insbesondere ein Sternradschwader, aber auch ein Kreiselschwader mit mehreren Kreiseln. Die im Folgenden offenbarte Erfindung wird hauptsächlich für einen Sternradschwader beschrieben, gilt aber gleichermaßen für einen Kreiselschwader mit mehreren Kreiseln offenbart.

Die Aufgabe der vorliegenden Erfindung ist, einen Sternradschwader mit mehreren Sternräder zu stellen, der bei Bodenunebenheiten, Hanglagen und unterschiedlichem Mähgut optimal einsetzbar ist, bei gleichzeitig schonender Behandlung und geringem Verschmutzungsgrad des Futters, sowie bei hoher bzw. gesteigerter Arbeitseffizienz und natürlich unter weitestgehender Vermeidung der oben aufgezeigten, bauarttypischen Nachteile.

Die Lösung der Aufgabe besteht zunächst in der Realisierung eines Sternradschwaders mit mindestens je einem einzelnen Antrieb für jede einzelne Zinkenvorrichtung, also für jedes Sternrad separat.

In einer Basis-Ausgestaltungsvariante eines erfindungsgemäßen Schwaders mit mindestens je einem Einzelantrieb für jede Zinkenvorrichtung sind die Einzelantriebe, sei es in Form eines Getriebes oder Motors, alle untereinander identisch und in Serie angeordnet. Hieraus resultiert in jeder Lage eine identische Umdrehungszahl und ein identisches Drehmoment für jede Zinkenvorrichtung.

Eine weitere Ausgestaltungsvariante eines erfindungsgemäßen Schwaders sieht unterschiedliche Einzelantriebe vor, die jedoch von ihrer Anordnung oder vielmehr von ihrer Größe und Leistung her fix vorgegeben sind. So kann beispielsweise die erste Zinkenvorrichtung konstant mittels eines fixen Getriebes oder Motors immer mit der gleichen Drehzahl n₁ angetrieben sein, während die zweite Zinkenvorrichtung beispielsweise mit einer größeren konstanten Drehzahl n₂ und die dritte Zinkenvorrichtung beispielsweise mit einer nochmals größeren konstanten Drehzahl n₃ angetrieben ist. Die unterschiedliche Drehzahl bzw. unterschiedliche Antriebskraft der einzelnen Zinkenvorrichtungen verhindert erfindungsgemäß die Zopfbildung.

Bei einer bevorzugten Ausgestaltungsvariante eines erfindungsgemäßen Schwaders jedoch sind die Einzelantriebe voll variabel und steuerbar. Der Fahrer ist weiterhin bevorzugt in der Lage, während der Fahrt bzw. Anwendung des Schwaders von der Fahrerkabine aus die Drehzahl und das Drehmoment jeder einzelnen Zinkenvorrichtung zu beeinflussen. Er kann so beispielsweise, je nach Bedarf, den inneren Zinkenvorrichtungen eine höhere Leistung geben als den äußeren oder umgekehrt oder - bei angewinkelter Stellung des Schwaders - den in Fahrtrichtung vorderen weniger und den hinteren steigend mehr, weil die hinteren Zinkenvorrichtungen nicht nur dasjenige Futtergut aufnehmen müssen, das vor ihnen liegt, sondern auch das Futtergut der vorderen zugerecht bekommen.

Weiterhin ist es bevorzugt, den Schwader mit dem Traktor nicht zu ziehen, sondern vorzugsweise zu schieben und somit vorne an einem vorderen Dreipunktanbaubock des Traktors zu befestigen. Hierfür umfasst die Grundkonstruktion eines erfindungsgemäßen Schwaders einen Längsträger mit einem Anschluss, welcher den Anschlussvoraussetzungen und Abmessungen des vorderen Dreipunktanbaubocks eines Traktors entspricht. Gegenüberliegend, an dem vorderen Ende des Längsträgers, ist gemäß einer ersten Basis-Ausgestaltungsvariante ein Querbalken oder vielmehr Querträger in einem Anlenkpunkt fix angelenkt, vorzugsweise mit dem Längsträger einen Winkel - im Folgenden Arbeitswinkel genannt - bildend, der in einem Bereich von 0 bis 75 Grad liegt, vorzugsweise jedoch ca. 30 Grad beträgt.

Wie also bereits erwähnt, wird ein erfindungsgemäßer Schwader vorzugsweise vor dem Traktor geschoben, genauso ist es aber auch möglich, ihn zu ziehen. Das Haupterfindungsmerkmal des Einzelantriebs pro Zinkenvorrichtung und die noch im Folgenden offenbarten Erfindungsmerkmale gelten für gezogene Schwadervarianten gleichermaßen, weil sie ohne erfinderisches Zutun übertragbar sind.

Der Längsträger kann ein Doppelträger aus zwei Einzelträgern sein, die parallel oder aber auch trapezförmig möglichst weit beabstandete Befestigungspunkte gewährleisten. Auf diese Weise können im Querträger bzw. Schwader auftretende Torsionskräfte bzw. sich aufschaukelnde Schwingungen am besten unterbunden werden.

An dem Querträger sind mindestens zwei, vorzugsweise jedoch mehrere Sternräder vorzugsweise überlappend angeordnet und dieses weiterhin erfingdungsgemäß mittels eines frei in einem Gelenk schwingenden L-förmigen Halters. Auf diese Weise sind die Sternräder pendelnd befestigt, indem sie je nach Bodendruck oder einer einzelnen Bodenunebenheit annähernd vertikal frei innerhalb des Bewegungsradius des L-förmigen Halters schwingen können.

Gemäß einer besonderen Ausgestaltungsvariante eines erfindungsgemäßen Schwaders ist dieser L-förmige Pendelhalter der einzelnen Sternräder oder der einzelnen Kreisel federunterstützt. Auf diese Weise ist es einerseits möglich, die Anpassung der Sternräder an Bodenunebenheiten nicht alleine nur über das Eigengewicht des Sternrades zu regeln, sondern eben durch Federkraft unterstützt einen konstanteren Anpressdruck der Sternräder auf dem Boden zu erreichen. Andererseits kann auf diese Weise ein mögliches Springen der Sternräder vermieden werden, das, bedingt durch die elastischen Zinken, insbesondere bei höheren Arbeitsgeschwindigkeiten auftreten kann.

Eine nochmals ganz besondere Ausgestaltungsvariante eines erfindungsgemäßen Schwaders sieht für den federunterstützten L-förmigen Pendelhalter Federn mit einer degressiven Kennlinie vor. Dieses bewirkt, dass bei vergrößertem Federweg nicht auch der Anpressdruck steigt - und sich die Zinken des Sternrades unerwünschtermaßen noch tiefer in die Erde eingraben, sondern mit zunehmendem Federweg der Anpressdruck des Sternrades auf dem Boden abnimmt.

Des Weiteren sind an einem erfindungsgemäßen Schwader mindestens zwei Stützräder angeordnet, die vorzugsweise, z.B. mittels einer Gewindespindel, höhenverstellbar sind. Die Sternräder sind vorzugweise an der Vorderseite des Querträgers angeordnet und die Stützräder vorzugsweise nachlaufend an der Rückseite. Optional können die Stützräder ebenfalls gefedert sein.

Wenn sich der ca. 30-grädige Arbeitswinkel zwischen Längs- und Querträger links befindet, also der Querträger in Fahrtrichtung nach links angestellt ist und mit seinem rechten Ende weiter vorne ist, so ergibt sich ein erfindungsgemäß schiebender Schwader, der die Schwade links ablegt. Für eine grundsätzliche und ausschließliche Rechtsablage der Schwade ist es vorgesehen, eine spiegelverkehrte fixe Anordnung von Längs- und Querträger anzubieten, bei welcher der ca. 30-grädige Arbeitswinkel zwischen Längs- und Querträger dann eben rechts gebildet ist.

Für mehr Flexibilität in der Anwendung, bzw., um dem Anwender die Wahlmöglichkeit zu geben, nach Bedarf und speziellen Einsatzvoraussetzungen zwischen Links- und Rechtsablage wechseln zu können, ist es bei einer weiteren Ausgestaltungsvariante eines erfindungsgemäßen Schwaders vorgesehen, ihn um 180 Grad um eine Längsachse des Längsträgers manuell drehen zu können und so gedreht ebenfalls anschließen zu können. Hierfür sind die Anschlüsse des Schwaders, die am Traktor vorzugsweise vorne am vorderen Dreipunktanbaubock angeschlossen werden, spiegelsymmetrisch ausgestaltet.

Zur Erleichterung der Drehung, auch für die noch folgenden Ausgestaltungsvarianten eines erfindungsgemäßen Schwaders mit integrierter 180-Grad-Drehbarkeit um die Längsachse des Längsträgers, ist es vorgesehen, dass der Dreipunktanbaubock den gesamten Schwader so anheben kann, dass er frei in der Luft gedreht werden kann. Der Dreipunktanbaubock kann dieses sowieso in jedem Fall, entscheidend jedoch, im Hinblick auf die hier offenbarten Schwader, sind die Abmessungen, das Gewicht und der Schwerpunkt der Grundkonstruktion. Nur, um ein Beispiel zu nennen, muss die Länge des Längsträgers so ausgewählt sein, dass der Querträger im angehobenen Zustand beispielsweise an der Fahrerkabine des Traktors auch vorbeigedreht werden kann.

Des Weiteren sind bei dieser Ausgestaltungsvariante in einer einfachsten Version nicht nur an der Unterseite des Querträgers Stützräder angeordnet, sondern auch an seiner Oberseite.

Bei einer anderen Ausgestaltungsvariante eines erfindungsgemäßen Schwaders, der um 180 Grad um die Längsachse des Längsträgers von Linksablage auf Rechtsablage und umgekehrt schwenkbar ist, sind Stützräder in einem Schwenkgelenk an dem Querträger angeordnet, das ein Schwenken der Stützräder von der Unter- auf die Oberseite des Querträgers und umgekehrt erlaubt. Des Weiteren ist an diesem Schwenkgelenk eine Arretiervorrichtung angeordnet, um die Stützräder in der unteren oder oberen Schwenkposition zu fixieren.

Um den Schwader um 180 Grad um die Längsachse des Längsträgers zu drehen, kann an dem Längsträger gemäß einer weiteren Ausgestaltungsvariante eines erfindungsgemäßen Schwaders auch eine in den Längsträger integrierte, mechanische oder mechanisch-hydraulische Drehvorrichtung vorgesehen sein. Diese Drehvorrichtung kann ein annähernd halbkreisförmiges Zahnrad umfassen oder einen Schneckenantrieb, der mechanisch über eine Antriebswelle des Traktors oder über die Hydraulikanlage des Traktors angetrieben wird. Für die waagerechten Schwenk-Endpositionen des Querträgers bzw. für die Betriebspositionen des Schwaders kann mindestens eine Arretiervorrichtung vorgesehen sein, oder aber auch für Zwischenpositionen, bevorzugt ist es jedoch, den Schwader stufenlos verschwenken und in jeder beliebigen Schwenkposition auch halten zu können, um eine allfällige Schwenkwinkel-Anpassung des Schwaders an Hangneigungen vornehmen zu können.

Vor dem Hintergrund, dass das Wenden des Schwaders um 180 Grad um die Längsachse des Längsträgers unter Umständen, je nach Größe und Gewicht des Schwaders, ein Problem darstellen könnte - insbesondere, sofern keine wie oben beschriebene Drehvorrichtung vorgesehen ist -, sieht eine weitere Ausgestaltungsvariante eines erfindungsgemäßen Schwaders im Anlenkpunkt zwischen Längs- und Querträger keine fixe Befestigung mehr vor, sondern ein Drehgelenk bzw. ein doppeltes Drehgelenk im Falle eines doppelten Längsträgers. Dieses Drehgelenk ist in einer einfacheren Version vorzugsweise nicht nur in einer grundsätzlichen Links- und Rechtsablage-Stellung arretierbar, sondern auch in einzelnen Stufen mit unterschiedlichen Arbeitswinkeln.

Eine einfachste Version eines solchen doppelten Drehgelenkes lässt sich von Hand mechanisch verstellen, indem die beiden einzelnen Längsträger, welche den Doppelträger bilden, in ihrer Länge adaptierbar sind. Dieses wiederum kann teleskopartig erfolgen und mit Arretierbolzen gesichert sein. Um die beiden einzelnen Längsträger beim Verschwenken des Querträgers bzw. bei dem so erfolgenden Einstellen des gewünschten Arbeitswinkels nicht biegen zu müssen, ist vorzugsweise mindestens eines der Einzelgelenke in einer langlochartigen Führung verschiebbar gelagert. Es kommt aber auch ein Doppelträger mit hydraulischen Zylindern in Betracht, sodass wie bei einem Pflug die Schar stufenlos und sogar während des Fahrens beliebig nach links oder rechts ausgerichtet werden kann.

Ein erfindungsgemäßer Schwader zeichnet sich durch eine Transportstellung aus. Um die Gesamtbreite des Schwaders unter Straßenfahrbahnbreite bzw. annähernd auf Traktorenbreite zu bekommen, sind an dem Querträger vorzugsweise mindestens zwei Klappgelenke vorgesehen. Auf diese Weise können das linke und rechte Ende des Querträgers, wie Klapparme, wenn man so will, vorzugsweise inklusive der daran befestigten Sternräder aufgeklappt werden, vorzugsweise über 90 Grad hinaus und weiterhin vorzugsweise mit einer Sicherung gegen selbsttätiges Öffnen gesichert. Das Betätigen der Klapparme kann grundsätzlich von Hand, aber auch jeweils mittels eines Hydraulikzylinders erfolgen. Für die geöffnete, waagerechte Betriebsposition der Klapparme ist an den Klappgelenken vorzugsweise jeweils ein Anschlag vorgesehen, der für die Klapparme einen gesicherten und stabilen Halt in diesen Betriebspositionen garantiert.

Alternativ können die Klappgelenke selbst jedoch so stabil ausgestaltet sein, dass der oben beschriebene Anschlag entfallen kann und die Klapparme sogar während des Betriebs frei schwingend bleiben. Auf diese Weise wäre es möglich, in besonders hügeligem Gelände eine gute Bodenanpassung zu erreichen, weil der Querträger sich dem Bodenprofil-Querschnitt beziehungsweise den jeweiligen Tälern oder Erhebungen laufend anpasst.

Weiterhin alternativ kann eine Transportstellung auch realisiert sein, indem der Querträger an seinen Enden ausfahrbare Teleskoparme aufweist. Die L-förmigen Pendelhalter der Sternräder sind dabei inklusive der Sternräder in einer integrierten Schiene des Querträgers verschieb- und fixierbar, die gleichermaßen durch eine Fassung für die Teleskoparme und die Teleskoparme selbst verläuft. Es kommt ein händisches Ausfahren der Teleskoparme und ebenfalls ein händisches Einstellen der L-förmigen Pendelhalter innerhalb der Schiene in Betracht, allerdings sind auch hydraulisch unterstützte Varianten denkbar und sogar eine, bei der die Fassung der ausfahrbaren Teleskoparme selber ein größerer doppelter Hydraulikzylinder ist und die ausfahrbaren Teleskoparme die Kolben.

Unabhängig von der Ausgestaltung des Querträgers mit ein- und ausfahrbaren Teleskoparmen für eine Transport- und eine Betriebsstellung, können alle in der vorliegenden Anmeldung offenbarten Querträger mit so einer Schienenführung für die L-förmigen Pendelhalter ausgestattet sein. Von Hand oder mittels eines seitlich angeordneten Hebelwerks für alle L-förmigen Pendelhalter oder auch hydraulisch unterstützt kann dann die Weite zwischen den Sternrad-Achsnaben bzw. der Grad der Überlappung der Sternräder innerhalb eines bestimmten Bereichs justiert werden, je nach speziellen Anforderungen und vielleicht auch je nach Länge und Gewicht des Schnittguts.

Die Anordnung der einzelnen Sternräder am Querträger eines erfindungsgemäßen Sternradschwaders betreffend, so können sie fix in einem bestimmten Anstellwinkel zum Querträger in den L-förmigen Pendelhaltern angeordnet sein. Gemäß einer wiederum bevorzugten Ausgestaltungsvariante eines erfindungsgemäßen Sternradschwaders sind die L-förmigen Pendelhalter jedoch mittels eines Drehlagers in einer waagerechten Ebene am Querträger dreh- und arretierbar. Diese Verstellmöglichkeit des Anstellwinkels der Sternräder kann beispielsweise sehr einfach realisiert sein, indem die L-förmigen Pendelhalter mittels eines beispielsweise sechskantigen Schaftes in einer entsprechend formschlüssig sechskantigen Aufnahme im Querträger umsteckbar sind. Auf diese Weise kann einfach gewählt werden zwischen mehreren negativen Anstellwinkel-Positionen der Sternräder, einer zum Querträger parallelen Ausrichtung und positiven Anstellwinkel-Positionen. Selbstverständlich ist hiermit jedoch auch eine beliebige, nicht an vorgegebene Einzelpositionen gebundene Dreh- und Fixierbarbarkeit der L-förmigen Pendelhalter offenbart, beispielsweise mittels runden zylindrischen Schäften und weiterhin beispielsweise mit einem Arretierbolzen, der in vorzugsweise schraubenlinienförmig angeordneten Arretierbohrungen in Schaft und Aufnahme einsetzbar ist.

Weil die einzelnen Sternräder vorzugsweise überlappend angeordnet sind, ist es bei der eben beschriebenen, aber auch insbesondere bei der in den Absätzen [0028] und [0029] beschriebenen Ausgestaltungsvariante mit einem Drehgelenk für Links- und Rechtsablage vorgesehen, vorzugsweise mindestens jedes zweite Sternrad - oder auch alle - mit einem axialen Schnellverschluss auszustatten. Dadurch können mindestens diese Sternräder leicht abgenommen werden und die Überlappungen stehen sich beim Umsetzen oder Schwenken von negativem zu positivem Anstellwinkel oder umgekehrt nicht im Weg.

Eine weitere Ausgestaltungsvariante eines erfindungsgemäßen Sternradschwaders kann mit maximaler Arbeitsbreite betrieben werden, also mit einem annähernd rechten Arbeitswinkel gebildet zwischen Längs- und Querträger. Hierbei können die Sternräder natürlich in einem Anstellwinkel fix oder wie oben beschrieben verstellbar angeordnet sein, in letzter Konsequenz hingegen jedoch parallel zu dem Querträger und eine Überlappung dadurch erreichend, indem sie in zwei parallelen Reihen angeordnet sind. Hierfür müssen lediglich die L-förmigen Pendelhalter für die vom Querträger weiter entfernt angeordnete Reihe länger ausgestaltet sein, sofern beide Reihen beispielsweise an der frontseitigen Stirnseite des Querträgers vorgesehen sind. Es wäre aber auch möglich, mit identischen L-förmigen Pendelhaltern, eine erste Reihe an der Vorder- und eine zweite Reihe an der Rückseite des Querträgers vorzusehen.

Weiterhin wäre es für ein verbessertes Vorwärtsschieben der dann zur Fahrtrichtung exakt quer stehenden Sternräder möglich, sie mit einem positiven Sturz zu befestigen, d.h., dass sie oben nach vorne geneigt sind und unten ein bisschen zurückversetzt sind.

Der Einzelantrieb der jeweiligen einzelnen Zinkenvorrichtungen erfolgt in einer bevorzugten Ausgestaltungsvariante hydraulisch, angeschlossen an und steuerbar durch die traktoreigene Hydraulikanlage, sofern vorhanden. Für kleinere Traktoren ohne Hydraulikanlage kann der Schwader einen Hydrauliköltank und eine Hydraulikpumpe umfassen, die an der Zapfwelle anschließbar ist und so einen schwadereigenen Hydraulikkreislauf ergibt. In beiden Fällen jedenfalls ist an jeder Zinkenvorrichtung je eine Einzel-Antriebseinheit in Gestalt eines Hydraulikmotors angeordnet, als sogenannter Konstantmotor für die in den Absätzen [0012] und [0013] beschriebenen fix vormontierten Ausgestaltungsvarianten und als sogenannter Verstellmotor für die in Absatz [0014] beschriebene, variable und separat ansteuerbare Ausgestaltungsvariante.

Der erfindungsgemäße Einzelantrieb pro Zinkenvorrichtung kann weiterhin erfindungsgemäß aber auch elektrisch erfolgen. Hierfür umfasst jede Einzel-Antriebseinheit einen ungeregelten Elektromotor oder einen Elektroantrieb, der neben dem Elektromotor auch eine Regelung umfasst. Mit einzelnen Elektroantrieben ist eine variable Ansteuerung jeder Zinkenvorrichtung natürlich gut realisierbar.

Nicht außer Betracht für den erfindungsgemäßen Einzelantrieb pro Zinkenvorrichtung fallen aber auch rein mechanische Ausgestaltungsvarianten. So kann die Rotationskraft der Zapfwelle des Traktors abgegriffen werden und beispielsweise mittels Winkelgetriebe, T-Getriebe, Schnecken-, Ketten- oder Kardanwellenantrieb realisiert sein.

Da moderne Traktoren auch ein pneumatisches Druckluftsystem haben, kommt auch ein pneumatischer Einzelantrieb der Sternräder in Betracht. Hierbei treibt vorzugsweise je ein Luftdruckstrahl je ein vorzugsweise achsnah am Sternrad angeordnetes Turbinenrad an. Dieses pneumatische Antriebssystem kann vorzugsweise sogar offen sein, d.h., der antreibende Luftdruckstrahl kann nach Passieren des Turbinenrades ins Freie entweichen. Darüber hinaus kann ein Teil-Luftdruckstrahl abgezweigt und schräg auf den Boden gelenkt werden, sodass insbesondere schweres Mähgut für eine verbesserte Aufnahme durch die Zinken angelupft wird. Diese Anlupf-Funktion soll sich von der Intensität her allerdings auch nur darauf beschränken, weil das Wegblasen von Mähgut beispielsweise mittels Laubbläsern ökologisch zweifelhaft ist. Der beschriebene pneumatische Einzelantrieb könnte jedoch seine Vorteile gerade unter ökologischen Gesichtspunkten haben, weil das System einfach ist und komplett ohne grundwasserverschmutzendem Hydraulik-, Schmieröl oder -fett auskommt.

Die Energiespeisung der Einzelantriebe betreffend, sind einfach so flexible Hydraulik-, elektrische Leitungen, Kardanwellen oder Luftdruckschläuche zwischen Querträger und Einzelmotor bzw. Einzelantriebseinheit vorgesehen, die ohne Weiteres die Pendelbewegungen des Pendelhalters mitmachen.

Ein erfindungsgemäßer Schwader umfasst in einer letzten Ausgestaltungsvariante eine Freilaufvorrichtung für alle einzelangetriebenen Zinkenvorrichtungen. Dieses kann vorzugsweise eine simultan für alle Achsnaben der Zinkenvorrichtungen wirkende mechanische, elektromechanische oder hydraulische Kupplung sein, die eine axial translatorische Bewegung der Zinkenvorrichtungs-Achsnabe in eine zwangsangetriebene und in eine frei laufende Stellung ermöglicht. Die Freilaufvorrichtung ist vorzugsweise zentral von der Fahrerkabine aus bedienbar. Dadurch kann der Einzelantrieb je nach Einsatzvoraussetzungen oder je nach Belieben ausgeschaltet werden und der erfindungsgemäße Schwader auch "klassisch" nur bodengetrieben eingesetzt werden.

Die vorliegende Anmeldung offenbart ein erstes Verfahren zum Zusammenrechen von Mähgut zu Schwaden bzw. zum Einsatz eines erfindungsgemäßen Sternradschwaders, mit folgenden grundsätzlichen Verfahrensschritten:
a) - Anschließen des Sternradschwaders an einen vorderen Dreipunktanbaubock eines Traktors;
b) - falls erforderlich, manuelles oder hydraulisches Verstellen des Sternradschwaders aus einer Transportstellung in eine Betriebsstellung;
c) - Auswählen eines Arbeitswinkels gebildet zwischen einem Längsträger und einem Querträger, für Links- oder Rechtsablage der Schwade;
d) - falls erforderlich, Anheben des Sternradschwaders durch Betätigen des Dreipunktanbaubocks;
e) - falls erforderlich, Betätigen einer Drehvorrichtung, die den Sternradschwader um 180 Grad um eine Längsachse des Längsträgers dreht;
f) - falls erforderlich, Schwenken von Stützrädern in einem Vertikal-Drehgelenk auf eine gegenüberliegende Seite des Querträgers und Arretieren der Stützräder in dieser Schwenkposition;
g) - falls erforderlich, Absenken des Sternradschwaders durch Betätigen des Dreipunktanbaubocks;
h) - Höhenjustieren der Stützräder durch Betätigen einer Gewindespindel an den Stützvorrichtungen;
i) - falls vorgesehen, Betätigen einer Kupplung zum Umschalten der Sternräder von Freilauf auf Zwangseinzelantrieb;
j) - Losfahren mit dem Traktor.

Die vorliegende Anmeldung offenbart ein zweites Verfahren zum Zusammenrechen von Mähgut zu Schwaden bzw. zum Einsatz eines weiteren erfindungsgemäßen Sternradschwaders, mit folgenden grundsätzlichen Verfahrensschritten:
a') - Anschließen des Sternradschwaders an einen vorderen Dreipunktanbaubock eines Traktors;
b') - falls erforderlich, manuelles oder hydraulisches Verstellen des Sternradschwaders aus einer Transportstellung in eine Betriebsstellung;
c') - Auswählen eines Arbeitswinkels gebildet zwischen einem Längsträger und einem Querträger, für Links- oder Rechtsablage der Schwade;
d') - falls erforderlich, Anheben des Sternradschwaders durch Betätigen von Gewindespindeln an Stützvorrichtungen oder durch Betätigen des Dreipunktanbaubocks;
e') - falls erforderlich, Betätigen eines Drehgelenks zum Verändern des Arbeitswinkels zwischen dem Längsträger und dem Querträger;
f') - falls erforderlich, Lösen und Entfernen derjenigen Sternräder, die mit einem Schnellverschluss befestigt sind durch Öffnen des Schnellverschlusses;
g') - falls erforderlich, Ausrichten oder Umstellen der Anstellwinkel der Sternräder durch Betätigen eines jeweiligen Drehlagers an jeweiligen L-förmigen Pendelhaltern der Sternräder;
h') - Zurückmontieren der entfernten Sternräder durch Aufsetzen der Sternräder und Schließen der Schnellverschlüsse;
i') - falls erforderlich, Absenken des Sternradschwaders durch Betätigen des Dreipunktanbaubocks;
j') - Höhenjustieren der Stützräder durch Betätigen der Gewindespindel der Stützvorrichtungen;
k') - falls vorgesehen, Betätigen einer Kupplung zum Umschalten der Sternräder von Freilauf auf Zwangseinzelantrieb;
l') - Losfahren mit dem Traktor.

Ein erfindungsgemäßer Sternradschwader bringt folgende Vorteile:
- Die Arbeitsleistung der einzelnen Sternräder ist verbessert und, sofern es vorgesehen ist, mit nach Bedarf unterschiedlicher Leistung angeboten oder sogar regulierbar.
- Es wird eine bessere Eignung für unterschiedliches oder schweres Mähgut erreicht.
- Die Zopfbildung ist unterbunden.
- Die Arbeitsgeschwindigkeit des Sternradschwaders ist nicht mehr von der Fahrtgeschwindigkeit des Traktors abhängig.
- Das Arbeitssystem Traktor-Sternradschwader ist für rutschiges oder steiles Gelände besser geeignet.
- Die Schwadablegung hangaufwärts ist verbessert.
- Durch das Schieben des Sternradschwaders vor dem Traktor findet weniger Futterverschmutzung und kein An- und Zusammenpressen des Futters mehr statt.
- Es kann die tatsächlich maximale Arbeitsbreite ausgenützt werden.
- Die Arbeitseffizienz ist generell verbessert.
- Die pendelnde Aufhängung bzw. Bodenanpassung der Sternräder ist durch Federunterstützung nochmals verbessert.
- Es ist ein wahlweiser Wechsel zwischen Links- und Rechtsablage der Schwade möglich.
- Sofern vorgesehen, ist für Hanglagen der Schwenkwinkel im Verhältnis zum Traktor anpassbar.
- Es ist eine Transportstellung vorgesehen, unter Umständen maschinell-automatisch bedienbar.
- Sofern es sich um die Ausgestaltungsvariante mit den frei schwingenden Klappgelenken handelt, ist eine verbesserte laufende Anpassung an den Bodenprofil-Querschnitt erreicht.
- Sofern vorgesehen, kann der axiale Abstand zwischen den einzelnen Sternrädern eingestellt werden.
- Der Anstellwinkel der Sternräder ist einstellbar.
- Dank eines Schnellverschlusses sind Sternräder leicht abnehm- und wieder fixierbar.
- Sofern es sich um die entsprechende Ausgestaltungsvariante handelt, ist eine Grundwasserverschmutzung durch den Sternradschwader gar nicht möglich.
- Dank einer Freilaufvorrichtung kann der Sternradschwader sowohl zwangsangetrieben, als auch bodengetrieben betrieben werden.

### Die offenbarten unterschiedlichen

Ausgestaltungsvarianten eines erfindungsgemäßen Schwaders sind miteinander kombinierbar. So sind beispielsweise die beschriebenen unterschiedlichen Ausgestaltungsvarianten von Sternradschwader hinsichtlich der Einzelmerkmale miteinander und untereinander kombinierbar, sei es, ob es sich um identische oder unterschiedliche vormontierte Einzelantriebe oder um variabel steuerbare handelt. Dieses gilt gleichermaßen für die geschobenen oder gezogenen Ausgestaltungsvarianten, sei es, ob es sich um feder- oder nicht federunterstützte Pendelhalter handelt oder die Ausgestaltungsvarianten mit oder ohne 180-Grad-Drehbarkeit, Drehgelenk zwischen Längs- und Querträger, Transportstellung, klappbar oder teleskopisch, Weitenverstellung der Sternräder oder Freilauf handelt. Des Weiteren sind die unterschiedlichen Antriebsarten hydraulisch, elektrisch, mechanisch oder pneumatisch miteinander kombinierbar.

Weitere oder vorteilhafte Ausgestaltungen eines erfindungsgemäßen Sternradschwaders bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indices geben funktionsgleiche oder ähnliche Bauteile an.

### Es zeigen dabei

Fig. 1 eine schematische Darstellung der Komponenten einer beispielhaften ersten Ausgestaltungsvariante eines erfindungsgemäßen Sternradschwaders im Einsatz und mit fixer Linksablage;
Fig. 2 eine schematische Darstellung des erfindungsgemäßen Sternradschwaders aus der Fig. 1, ebenfalls im Einsatz, aber um 180 Grad gewendet und somit Rechtsablage ergebend;
Fig. 3 eine ebenfalls schematische Darstellung eines weiterhin erfindungsgemäßen höhenjustierbaren und schwenkbaren Stützrades;
Fig. 4 eine ebenfalls schematische Darstellung der Komponenten einer zweiten Ausgestaltungsvariante eines erfindungsgemäßen Sternradschwaders mit einer in einem Längsträger integrierten Drehvorrichtung;
Fig. 5 eine ebenfalls schematische Teildarstellung einer dritten Ausgestaltungsvariante eines erfindungsgemäßen Sternradschwaders mit einem doppelten Drehgelenk in einem Anlenkpunkt zwischen dem Längsträger und einem Querträger;
Fig. 6 eine ebenfalls schematische Teildarstellung einer vierten Ausgestaltungsvariante eines weiterhin erfindungsgemäßen Sternradschwaders mit einer klappbaren Transportstellung;
Fig. 7 eine ebenfalls schematische Teildarstellung einer fünften Ausgestaltungsvariante eines weiterhin erfindungsgemäßen Sternradschwaders mit einer Transportstellung, die mittels Teleskoparmen realisiert ist;
Fig. 8 eine ebenfalls schematische Teildarstellung einer sechsten Ausgestaltungsvariante eines weiterhin erfindungsgemäßen Sternradschwaders mit zwei parallelen Reihen von Sternrädern und
Fig. 9 eine schematische Teildarstellung einer siebten Ausgestaltungsvariante eines weiterhin erfindungsgemäßen Sternradschwaders mit Sternrädern, die mit einem positiven Sturz angewinkelt angeordnet sind.

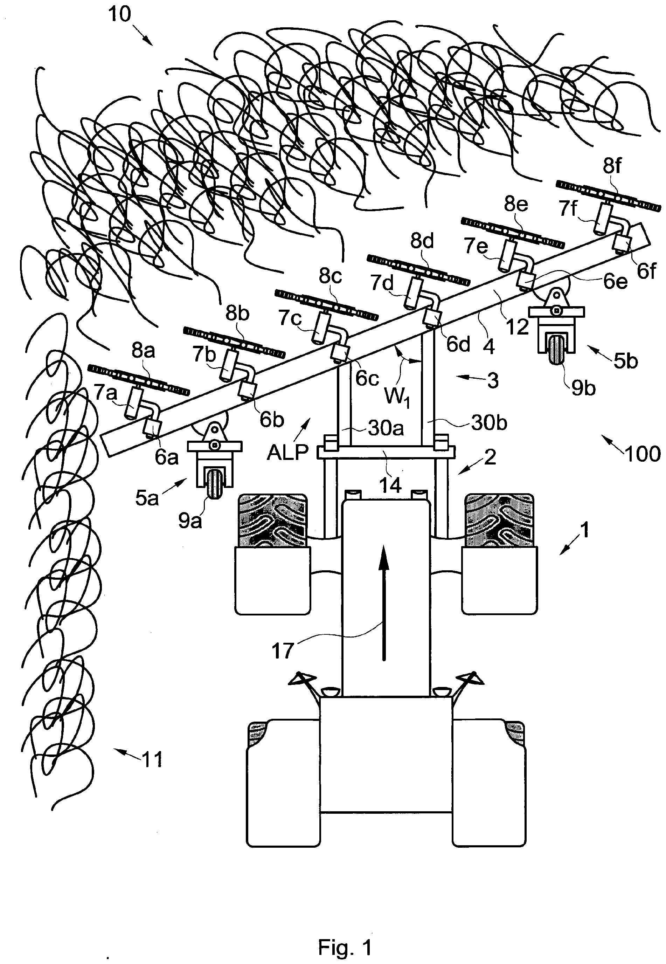

Die Fig. 1 zeigt schematisch eine erste Ausgestaltungsvariante bzw. die Komponenten eines erfindungsgemäßen Sternradschwaders 100, der sich im Einsatz befindet und demzufolge von einem Traktor 1 erfindungsgemäß in einer Fahrtrichtung 17 geschoben wird. Hierfür ist der Sternradschwader 100 mittels eines Längsträgers 3, im Einzelnen einen ersten Einzel-Längsträger 30a und einen zweiten Einzel-Längsträger 30b umfassend, mit einem Anschlusszylinder 14 an einem vorderen Dreipunktanbaubock 2 des Traktors 1 befestigt.

Der Längsträger 3 bildet mit einem Querträger 4 einen Anlenkpunkt ALP und einen Arbeitswinkel W₁, der weniger als 90 Grad beträgt. Dadurch ist der Sternradschwader 100 links zurückversetzt und legt in sogenannter Linksablage zusammengerechtes Futtergut 10 in einer Schwade 11 ab.

An dem Querträger 4 sind Stützvorrichtungen 5a und 5b angeordnet, jeweils mit einem frei mitlaufenden Stützrad 9a und 9b. Des Weiteren sind an dem Querträger 4 an einer Oberseite 12 in regelmäßigen Abständen Sternräder 8a-8f überlappend angeordnet, mit Hilfe von je einem L-förmigen Pendelhalter 6a-6f. Zwischen den L-förmigen Pendelhaltern 6a-6f und den Sternrädern 8a-8f sind jeweils Einzelantriebe 7a-7f angeordnet, die hydraulisch, elektrisch, mechanisch oder pneumatisch sein können.

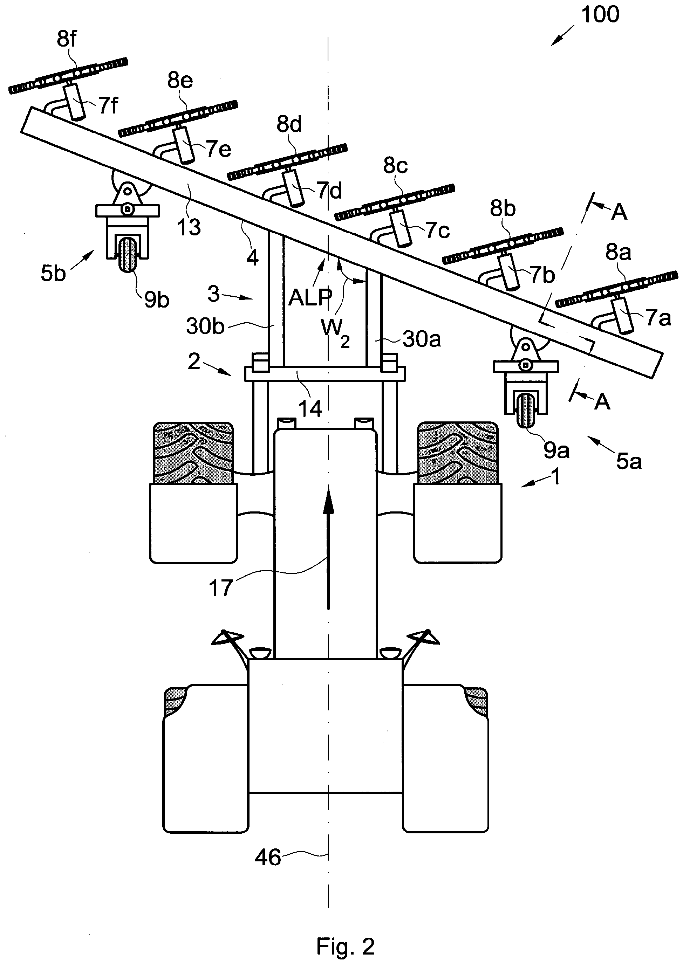

In der Fig. 2 ist die erste Ausgestaltungsvariante eines erfindungsgemäßen Sternradschwaders 100 nochmal dargestellt, dieses Mal jedoch ist der Sternradschwader für eine Rechtsablage um 180 Grad um eine Längsachse 46 des Längsträgers 3 gedreht worden. Demzufolge ist ein Arbeitswinkel W₂ nun größer als 90 Grad und eine Unterseite 13 des Querträgers 4 ist nun oben. Dadurch, dass der Anschlusszylinder 14 spiegelsymmetrisch ausgestaltet ist, kann der Sternradschwader 100 auch in dieser um 180 Grad gedrehten Position an dem Dreipunktanbaubock 2 befestigt sein.

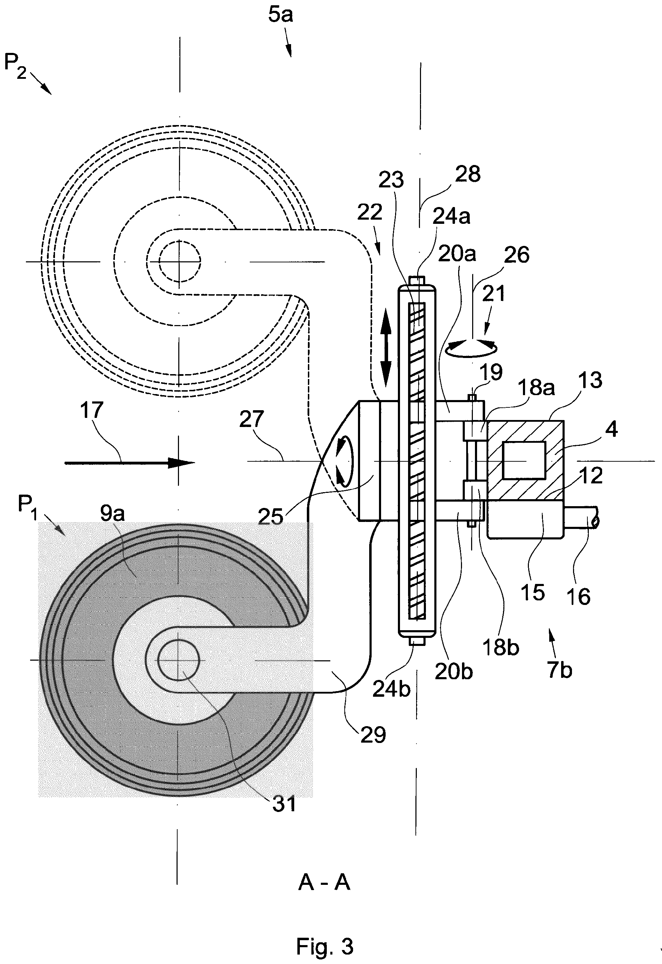

Die Fig. 3 zeigt schematisch die Stützvorrichtung 5a aus der Fig. 2, von rechts betrachtet, wie der Schnitt A-A in dieser Figur angibt. Man sieht den um 180 Grad gedrehten Querträger 4 geschnitten und an seiner sich nun unten befindenden Oberseite 12 den L-förmigen Pendelhalter 7b, der ein Drehlager 15 und einen Pendelarm 16 umfasst. Entgegengesetzt zu der Fahrtrichtung 17 sind an dem Querträger 4 vorzugsweise zwei Laschen 18a und 18b angeschweißt, in die ein Stift 19 drehbar eingesetzt ist und so gleichzeitig zwei Gegenlaschen 20a und 20b zu einem Horizontal-Drehgelenk 21 vereint. Dieses Horizontal-Drehgelenk 21 ist also freilaufend um eine Vertikalachse 26 drehend und richtet sich somit von alleine immer gegen die Fahrtrichtung 17 aus.

Die zwei Gegenlaschen 20a und 20b sind an einer Höhenverstellung 22 angeordnet, die eine Gewindespindel 23 mit einem oberen Vierkant 24a und einem unteren 24b umfasst. Durch Drehung an einem der Vierkante 24a oder 24b wird somit eine Höhenverstellung eines L-förmigen Radhalters 29 in einer Höhenachse 28 erreicht. An der den Gegenlaschen 20a und 20b gegenüberliegenden Seite der Höhenverstellung 22 ist ein Vertikal-Drehgelenk 25 angeordnet, das eine Drehung des Radhalters 29 um eine Horizontalachse 27 erlaubt, vorzugsweise mit Einrastpositionen P₁ und P₂ für das Stützrad 9a in der Vertikalachse 26, die erstere Einrastposition P₁ wie mit durchgezogenen Linien dargestellt und die letztere wie mit Strichlinien angedeutet. Das Stützrad 9a hat eine Radachse 31, die vorzugsweise beidseitig gelagert ist.

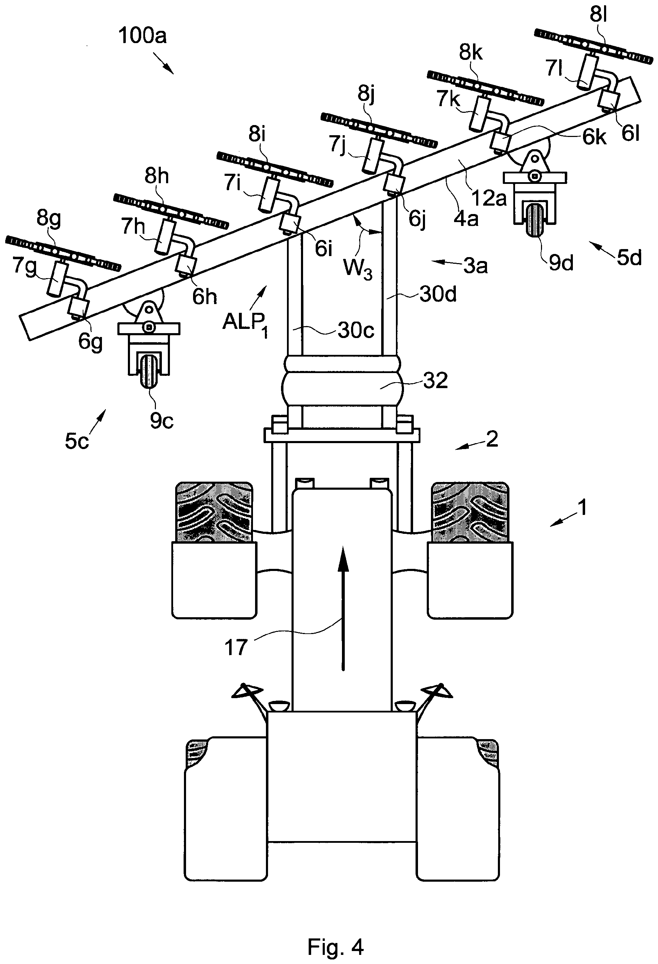

In der Fig. 4 ist schematisch eine weitere, zweite Ausgestaltungsvariante eines erfindungsgemäßen Sternradschwaders 100a dargestellt, die sich von dem Sternradschwader 100 aus den Figuren 1 und 2 dadurch unterscheidet, dass an einem ansonsten gleichen Längsträger 3a mit einer Längsachse 46a eine Drehvorrichtung 32 für maschinell-automatisches Drehen des Sternradschwaders 100a um 180 Grad angeordnet ist.

Ansonsten umfasst der Sternradschwader 100a wie gehabt zwei Einzel-Längsträger 30c und 30d, die mit einem Querträger 4a einen Anlenkpunkt ALP₁ und einen Arbeitswinkel W₃ bilden. An einer Rückseite des Querträgers 4a sind Stützvorrichtungen 5c und 5d angeordnet, jeweils mit Stützrädern 9c und 9d. An einer Oberseite 12a des Querträgers 4a sind L-förmige Pendelhalter 6g-61 angeordnet, jeweils mit Einzelantrieben 7g-7l für Sternräder 8g-8l.

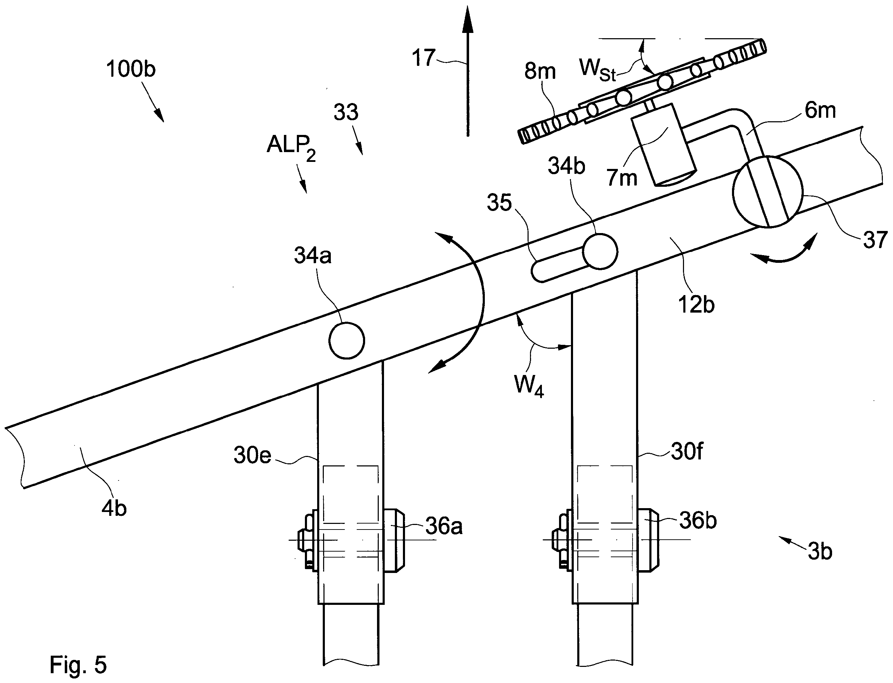

Die Fig. 5 zeigt schematisch eine weitere, dritte Ausgestaltungsvariante eines erfindungsgemäßen Sternradschwaders 100b, bei dem ein Anlenkpunkt ALP₂ zwischen einem Doppellängsträger 3b und einem Querträger 4b als doppeltes Drehgelenk 33 realisiert ist und somit einen variablen Arbeitswinkel W₄ ergibt. Das doppelte Drehgelenk 33 umfasst beispielsweise ein fixes Einzelgelenk. 34a und ein variables Einzelgelenk 34b, das in einem Führungs-Langloch 35 die Längenunterschiede ausgleichen kann. Die Einzelgelenke 34a und 34b sind symbolisch dargestellt, am geeignetsten sind wohl Gelenksklauen wie bei Kardanwellen, die den Querträger 4b ober- und unterseitig fassen.

Ebenfalls, um die Längenunterschiede bei der Drehbewegung auszugleichen, sind ein linker Einzel-Längsträger 30e und ein rechter Einzel-Längsträger 30f teleskopisch ausgestaltet und jeweils mit Arretierbolzen 36a und 36b arretierbar. Die teleskopische Ausgestaltung des linken Einzel-Längsträgers 30e ist fakultativ, ermöglicht jedoch, sofern zusätzlich erwünscht, den Querträger 4b bzw. den Sternradschwader 100b um 180 Grad zu drehen und so auf die Einzel-Längsträger 30e und 30f aufzusetzen.

Des Weiteren ist exemplarisch auch für alle anderen Ausgestaltungsvarianten eines erfindungsgemäßen Sternradschwaders gezeigt, dass ein jeder einzelner L-förmige Pendelhalter 6m an einer Oberseite 12b des Querträgers 4b in einem Drehlager 37 angeordnet sein kann und dadurch ein Sternrad 8m inklusive eines Einzelantriebes 7m in einem Anstellwinkel W_{St} zu der Fahrtrichtung 17 variabel ist.

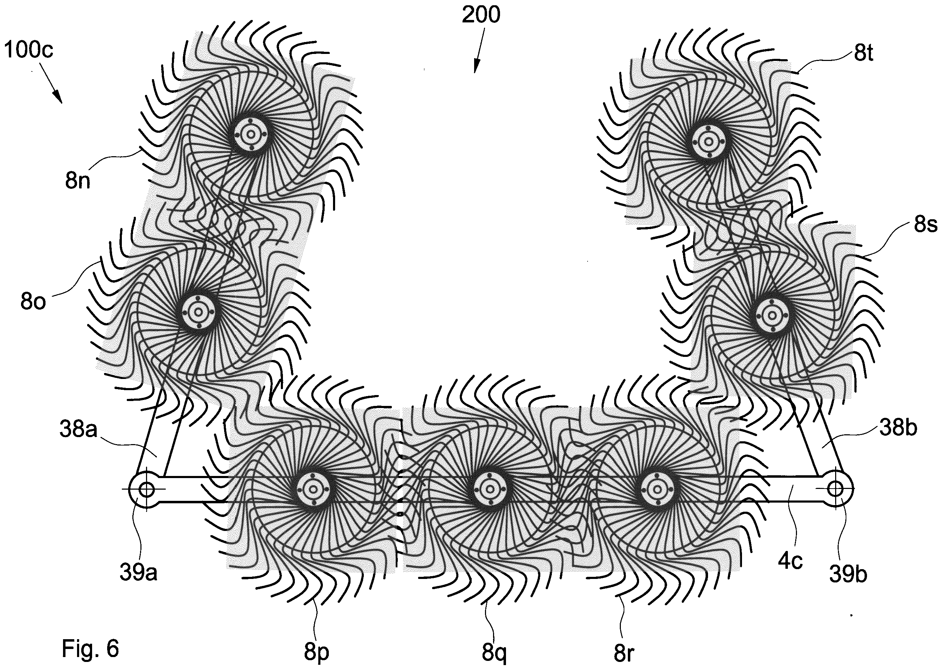

In der Fig. 6 ist schematisch dargestellt, wie bei einer vierten Ausgestaltungsvariante eines erfindungsgemäßen Sternradschwaders 100c eine Transportstellung 200 realisiert ist. Hierfür weist ein Querträger 4c zwei Klapparme 38a und 38b auf, die in Klappgelenken 39a und 39b mehr als 90 Grad verschwenkbar sind und sich an nicht näher dargestellten Anschlägen aufstützen und alleine aufgrund des Gewichtes der Klapparme 38a und 38b auch in dieser Transportstellung 200 auch verbleiben. Es können aber auch Hydraulikzylinder angeordnet sein, die nicht nur das Aufklappen bewerkstelligen, sondern auch das Halten in der aufgeklappten Stellung. Des Weiteren können auch für die ausgeklappte, waagerechte Betriebsstellung der Klapparme 38a und 38b Anschläge vorgesehen sein. Andererseits kann mit frei schwingenden Klappgelenken 39a und 39b eine Sternradschwader-Variante mit verbesserter Anpassung an den Bodenprofil-Querschnitt realisiert sein, gemäß Absatz [0031].

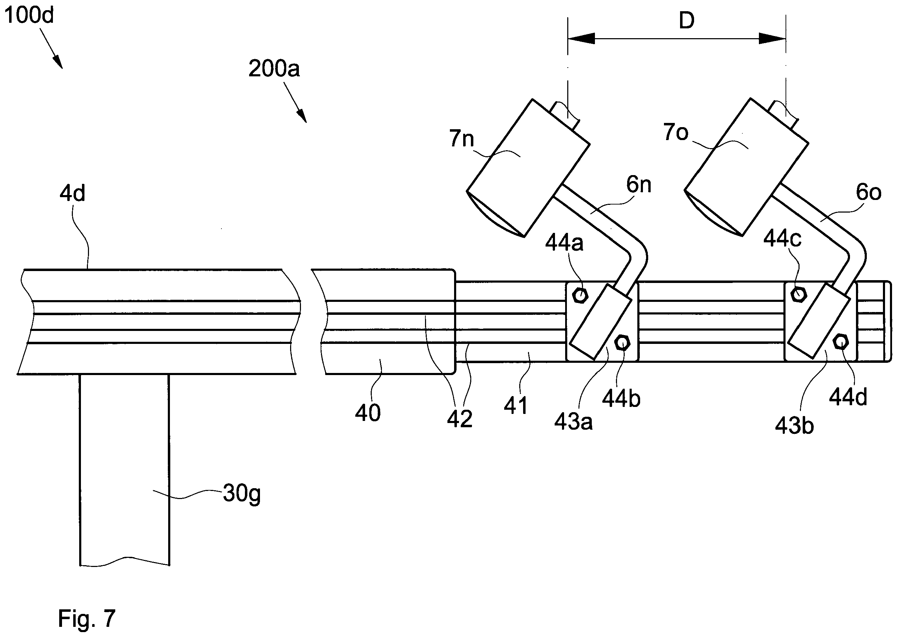

Die Fig. 7 zeigt schematisch und nur teilweise eine fünfte Ausgestaltungsvariante eines erfindungsgemäßen Sternradschwaders 100d, bei der eine Transportstellung 200a erreicht wird, indem ein Querträger 4d auf jeder Seite eines Einzel-Längsträgers 30g je eine Teleskopfassung 40 aufweist, aus der ein Teleskoparm 41 in Betriebsstellung aus- und in die Transportstellung 200a einfahrbar ist, vorzugsweise hydraulisch. Quer durch den Querträger 4d, sowohl durch die Teleskopfassung 40, als auch durch den Teleskoparm 41 ist eine vorzugsweise doppelte Schiene 42 gelegt, in der nur beispielhaft nur anhand von je einem L-förmigen Pendelhalter 6n und 6o und daran angeordneten Einzelantrieben 7n und 7o gezeigt ist, dass sie mittels Schlitten 43a und 43b verschiebbar sind. Auf diese Weise ist es möglich, auch für alle anderen Querträger-Ausführungen, eine Distanz D zwischen den einzelnen Sternrädern bzw. den Grad der Überlappung einzustellen und anschließend beispielsweise mit Schrauben 44a-44d zu fixieren.

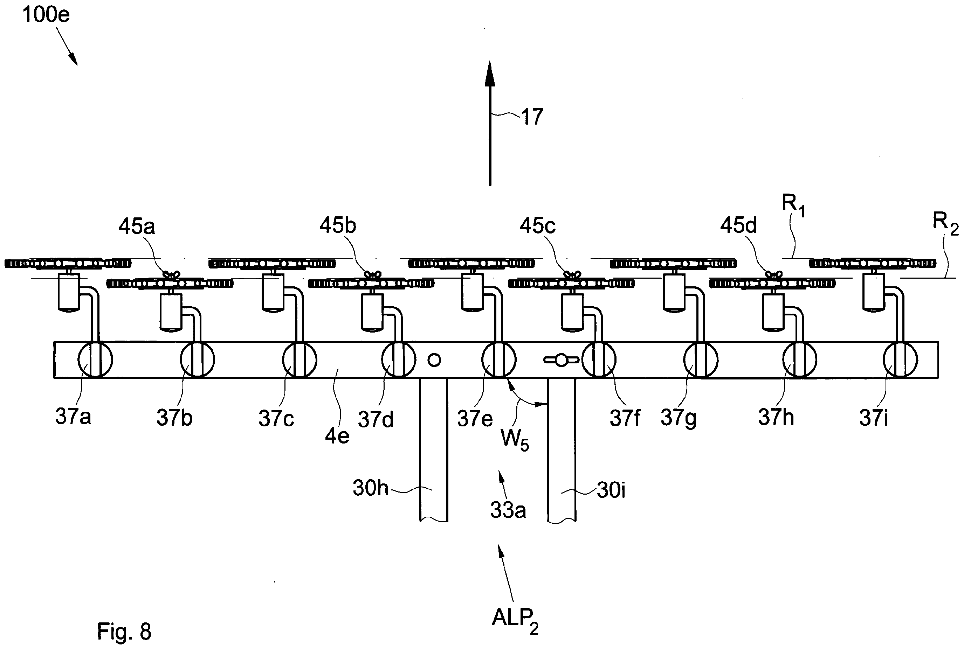

In der Fig. 8 ist schematisch eine sechste Ausgestaltungsvariante eines weiterhin erfindungsgemäßen Sternradschwaders 100e teildargestellt, die ein doppeltes Drehgelenk 33a umfasst und somit mit positivem, negativem, aber auch, so wie dargestellt, mit einem annähernd rechten Arbeitswinkel W₅ betrieben werden kann. Zwei Einzel-Längsträger 30h und 30i haben einen Anlenkpunkt ALP₂ mit einem Querträger 4e, an dem wiederum, jeweils in Drehlagern 37a-37i, zwei parallele Reihen R₁ und R₂ von Sternrädern angeordnet sind. Die Sternräder der Reihe R₂ sind vorzugsweise mit Schnellverschlüssen 45a-45d befestigt. Auf diese Weise kann einerseits in Fahrtrichtung 17 die tatsächliche maximale Arbeitsbreite des Querträgers 4e ausgenützt werden und andererseits können die Sternräder in ihrem Anstellwinkel variiert werden.

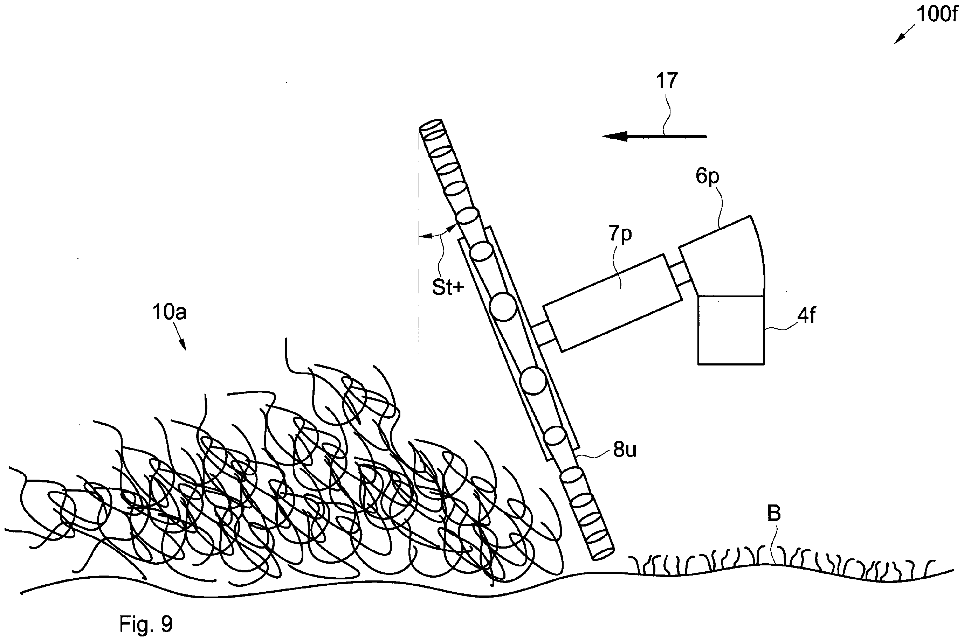

Die Fig. 9 zeigt schematisch, dass bei einer siebten mittels Figuren zeichnerisch dargestellten oder angedeuteten Ausgestaltungsvariante eines erfindungsgemäßen Sternradschwaders 100f ein Betreiben der Sternräder exakt quer zur Fahrtrichtung 17 - so wie beispielsweise in Fig. 8 gezeigt - durch einen sogenannten positiven Sturz St+ verbessert ist. So angewinkelt, gleitet ein Sternrad 8u besser über einen Boden B, weil es nicht verhakt und so Mähgut 10a besser aufnimmt. Um diesen positiven Sturz St+ zu erreichen, kann an einem Querträger 4f ein L-förmiger Pendelhalter 6p mit schräger Achsausrichtung angeordnet sein und über einen Einzelantrieb 7p das Sternrad 8u antreiben.

### Bezugszeichenliste

1 - Traktor
2 - vorderer Dreipunktanbaubock
3, 3a-3d - Längsträger
4, 4a-4f - Querträger, Querbalken
5a-5d - Stützvorrichtung
6a-6p - L-förmige Pendelhalter
7a-7p - Einzelantrieb, Motor
8a-8u - Sternrad
9a-9d - Stützrad
10, 10a - Futtergut, Mähgut, Schnittgut
11 - Schwade
12, 12a, 12b - Oberseite vom Querträger
13 - Unterseite vom Querträger
14 - Anschlusszylinder
15 - Drehlager
16 - Pendelarm
17 - Fahrtrichtung
18a, 18b - Lasche
19 - Stift
20a, 20b - Gegenlasche
21 - Horizontal-Drehgelenk
22 - Höhenverstellung
23 - Gewindespindel
24a, 24b - Vierkant
25 - Vertikal-Drehgelenk
26 - Vertikalachse
27 - Horizontalachse
28 - Höhenachse
29 - Radhalter
30a-30i - Einzel-Längsträger
31 - Radachse
32 - Drehvorrichtung
33, 33a - doppeltes Drehgelenk
34a, 34b - Einzelgelenk
35 - Führungs-Langloch
36a, 36b - Arretierbolzen
37, 37a-37i - Drehlager
38a, 38b - Klapparme
39a, 39b - Klappgelenke
40 - Teleskopfassung
41 - Teleskoparm
42 - Schiene
43a, 43b - Schlitten
44a-44d - Schrauben
45a-45d - Schnellverschluss
46, 46a - Längsachse von 3 bzw. 3a

100, 100a-100f - Sternradschwader
200, 200a - Transportstellung

ALP, ALP₁, ALP₂ - Anlenkpunkt
B - Boden
D - Distanz
P₁, P₂ - Position Stützrad
R₁, R₂ - Sternrad-Reihe
St+ - positiver Sturz
W₁-W₅ - Arbeitswinkel
W_{St} - Anstellwinkel, Angriffswinkel

## Patentansprüche

1. Sternradschwader (100, 100a-100f) für das Zusammenrechen von Futtergut (10, 10a) zu Schwaden (11), mit mindestens einem Längsträger (3, 3a-3d) und mindestens einem Querträger (4, 4a-4f), die miteinander einen Anlenkpunkt (ALP, ALP₁, ALP₂) und einen Arbeitswinkel (W₁-W₅) bilden und wobei an dem Querträger (4, 4a-4f) mindestens zwei Sternräder (8a-8u) überlappend montiert sind, **dadurch gekennzeichnet, dass** jedes einzelne Sternrad (8a-8u) mittels je eines L-förmigen Pendelhalters (6a-6p) an dem Querträger (4, 4a-4f) angeordnet ist und jedes einzelne Sternrad (8a-8u) mit je einem Einzelantrieb (7a-7p) angetrieben ist.

2. Sternradschwader (100, 100a-100f) nach Anspruch 1, **dadurch gekennzeichnet, dass** die Einzelantriebe (7a-7p) variabel und einzeln ansteuerbar sind.

3. Sternradschwader (100, 100a-100f) nach einem der vorhergehenden Ansprüche, **dadurch gekennzeichnet, dass** die L-förmigen Pendelhalter (6a-6p) federunterstützt sind.

4. Sternradschwader (100, 100a-100f) nach einem der vorhergehenden Ansprüche, **dadurch gekennzeichnet, dass** der Sternradschwader (100, 100a-100f) mindestens zwei Stützvorrichtungen (5a-5d) mit Stützrädern (9a-9d) umfasst, die mittels einer Höhenverstellung (22) höhenverstellbar sind.

5. Sternradschwader (100, 100a-100f) nach Anspruch 4, **dadurch gekennzeichnet, dass** der Sternradschwader (100, 100a-100f) um eine Längsachse (46, 46a) des Längsträgers (3, 3a-3d) um 180 Grad drehbar ist und die mindestens zwei Stützräder (9a-9d) von einer ersten Position (P₁), die einer Oberseite (12, 12a, 12b) des Querträgers (4, 4a-4f) entspricht, zu einer zweiten Position (P₂) schwenkbar sind, die einer Unterseite (13) des Querträgers (4, 4a-4f) entspricht.

6. Sternradschwader (100, 100a-100f) nach einem der vorhergehenden Ansprüche, **dadurch gekennzeichnet, dass** der Anlenkpunkt (ALP, ALP₁, ALP₂) zwischen dem Längsträger 3, 3a-3d) und dem Querträger (4, 4a-4f) durch ein Drehgelenk (33, 33a) gebildet ist.

7. Sternradschwader (100, 100a-100f) nach einem der vorhergehenden Ansprüche, **dadurch gekennzeichnet, dass** der Sternradschwader (100c, 100d) einen Querträger (4c, 4d) mit Armen (38a, 38b, 41) umfasst, die aus einer Betriebsstellung in eine Transportstellung (200, 200a) klapp- oder einfahrbar sind.

8. Sternradschwader (100, 100a-100f) nach einem der vorhergehenden Ansprüche, **dadurch gekennzeichnet, dass** an dem Querträger (4, 4a-4f) eine Schiene (42) angeordnet ist, in der die L-förmigen Pendelhalter (6n, 6o) mittels eines Schlittens (43a, 43b) verschiebbar sind.

9. Sternradschwader (100, 100a-100f) nach einem der vorhergehenden Ansprüche, **dadurch gekennzeichnet, dass** die L-förmigen Pendelhalter (6a-6p) in einem Drehlager (37, 37a-37i) in einer Ebene drehbar sind, die zu einer Oberseite (12b) des Querträgers (4b) annähernd parallel ist.

10. Sternradschwader (100, 100a-100f) nach einem der vorhergehenden Ansprüche, **dadurch gekennzeichnet, dass** die Sternräder (8a-8u) in mindestens einer Sternrad-Reihe (R₁, R₂) angeordnet sind und mindestens jedes zweite Sternrad (8a-8u) mittels eines axialen Schnellverschlusses (45a-45d) abnehm- und befestigbar ist.

11. Sternradschwader (100f) nach einem der vorhergehenden Ansprüche, **dadurch gekennzeichnet, dass** die Sternräder (8u) mit einem positiven Sturz (St+) angeordnet sind.

12. Sternradschwader (100, 100a-100f) nach einem der vorhergehenden Ansprüche, **dadurch gekennzeichnet, dass** die Einzelantriebe (7a-7p) hydraulisch angetrieben sind.

13. Sternradschwader (100, 100a-100f) nach einem der vorhergehenden Ansprüche 1-11, **dadurch gekennzeichnet, dass** die Einzelantriebe (7a-7p) elektrisch angetrieben sind.

14. Sternradschwader (100, 100a-100f) nach einem der vorhergehenden Ansprüche 1-11, **dadurch gekennzeichnet, dass** die Einzelantriebe (7a-7p) mechanisch angetrieben sind.

15. Sternradschwader (100, 100a-100f) nach einem der vorhergehenden Ansprüche 1-11, **dadurch gekennzeichnet, dass** die Einzelantriebe (7a-7p) pneumatisch angetrieben sind.

16. Sternradschwader (100, 100a-100f) nach einem der vorhergehenden Ansprüche, **dadurch gekennzeichnet, dass** die Sternräder (8a-8u) mittels einer axialen Kupplung aus einer Zwangsantriebs-Stellung in eine Freilauf-Stellung bringbar sind.

17. Verfahren zum Zusammenrechen von Mähgut (10, 10a) zu Schwaden (11) bzw. zum Einsatz eines Sternradschwaders (100, 100a-100f) nach einem der vorhergehenden Ansprüche 1-16, **dadurch gekennzeichnet, dass** folgende Verfahrensschritte ausgeführt werden:
a) - Anschließen des Sternradschwaders (100, 100a-100f) an einen vorderen Dreipunktanbaubock (2) eines Traktors (1);
b) - falls erforderlich, manuelles oder hydraulisches Verstellen des Sternradschwaders (100, 100a-100f) aus einer Transportstellung (200, 200a) in eine Betriebsstellung;
c) - Auswählen eines Arbeitswinkels (W₁-W₅) gebildet zwischen einem Längsträger (3, 3a-3d) und einem Querträger (4, 4a-4f), für Links- oder Rechtsablage der Schwade (11);
d) - falls erforderlich, Anheben des Sternradschwaders (100, 100a-100f) durch Betätigen des Dreipunktanbaubocks (2);
e) - falls erforderlich, Betätigen einer Drehvorrichtung (32), die den Sternradschwader (100a) um 180 Grad um eine Längsachse (46) des Längsträgers (3a) dreht;
f) - falls erforderlich, Schwenken von Stützrädern (9a-9d) in einem Vertikal-Drehgelenk (25) auf eine gegenüberliegende Seite (13) des Querträgers (4) und Arretieren der Stützräder (9a-9d) in dieser Schwenkposition (P₂) durch Betätigen einer Arretiervorrichtung;
g) - falls erforderlich, Absenken des Sternradschwaders (100, 100a-100f) durch Betätigen des Dreipunktanbaubocks (2);
h) - Höhenjustieren der Stützräder (9a-9d) durch Betätigen einer Gewindespindel (23) an den Stützvorrichtungen (5a-5d);
i) - falls vorgesehen, Betätigen einer Kupplung zum Umschalten der Sternräder (8a-8u) von Freilauf auf Zwangseinzelantrieb;
j) - Losfahren mit dem Traktor (1).

18. Verfahren zum Zusammenrechen von Mähgut (10, 10a) zu Schwaden (11) bzw. zum Einsatz eines Sternradschwaders (100, 100a-100f) nach einem der vorhergehenden Ansprüche 1-16, **dadurch gekennzeichnet, dass** folgende Verfahrensschritte ausgeführt werden:
a') - Anschließen des Sternradschwaders (100, 100a-100f) an einen vorderen Dreipunktanbaubock (2) eines Traktors (1);
b') - falls erforderlich, manuelles oder hydraulisches Verstellen des Sternradschwaders (100, 100a-100f) aus einer Transportstellung (200, 200a) in eine Betriebsstellung;
c') - Auswählen eines Arbeitswinkels (W₁-W₅) gebildet zwischen einem Längsträger (3, 3a-3d) und einem Querträger (4, 4a-4f), für Links- oder Rechtsablage der Schwade (11);
d') - falls erforderlich, Anheben des Sternradschwaders (100, 100a-100f) durch Betätigen von Gewindespindeln (23) an Stützvorrichtungen (5a-5d) oder durch Betätigen des Dreipunktanbaubocks (2);
e') - falls erforderlich, Betätigen eines Drehgelenks (33, 33a) zum Verändern des Arbeitswinkels (W₁-W₅) zwischen dem Längsträger (3, 3a-3d) und dem Querträger (4, 4a-4f);
f') - falls erforderlich, Lösen und Entfernen derjenigen Sternräder (8a-8u), die mit einem Schnellverschluss (45a-45d) befestigt sind durch Öffnen des Schnellverschlusses (45a-45d);
g') - falls erforderlich, Ausrichten oder Umstellen der Anstellwinkel (W_{St}) der Sternräder (8a-8u) durch Betätigen eines jeweiligen Drehlagers (37, 37a-37i) an jeweiligen L-förmigen Pendelhaltern (6a-6p) der Sternräder (8a-8u);
h') - Zurückmontieren der entfernten Sternräder (8a-8u) durch Aufsetzen der Sternräder (8a-8u) und durch Schließen der Schnellverschlüsse (45a-45d);
i') - falls erforderlich, Absenken des Sternradschwaders (100, 100a-100f) durch Betätigen des Dreipunktanbaubocks (2);
j') - Höhenjustieren der Stützräder (9a-9d) durch Betätigen der Gewindespindel (23) der Stützvorrichtung (5a-5d);
k') - falls vorgesehen, Betätigen einer Kupplung zum Umschalten der Sternräder (8a-8u) von Freilauf auf Zwangseinzelantrieb;
l') - Losfahren mit dem Traktor (1).

## Claims

1. Star wheel swather (100, 100a-100f) for the raking of mowing material (10, 10a) into swathes (11), with at least one longitudinal beam (3, 3a-3d) and at least one crossbeam (4, 4a-4f), which form one with another an articulation point (ALP, ALP₁, ALP₂) and an operating angle (W₁-W₅), and wherein on the crossbeam (4, 4a-4f) are mounted at least two star wheels (8a-8u) overlapping each other, **characterized in that** each individual star wheel (8a-8u) is arranged on the crossbeam (4, 4a-4f) by means of a respective L-shaped oscillating bracket (6a-6p) and each one individual star wheel (8a-8u) is driven by a individual drive (7a-7p).

2. Star wheel swather (100, 100a-100f) according to claim 1, **characterized in that** the individual drives (7a-7p) are variably and individually controllable.

3. Star wheel swather (100, 100a-100f) according to one of the preceding claims, **characterized in that** the L-shaped oscillating brackets (6a-6p) are spring-supported.

4. Star wheel swather (100, 100a-100f) according to one of the preceding claims, **characterized in that** the star wheel swather (100, 100a-100f) comprises at least two supporting devices (5a-5d) with supporting wheels (9a-9d), which with a height adjusting mechanism (22) are height-adjustable.

5. Star wheel swather (100, 100a-100f) according to claim 4, **characterized in that** the star wheel swather (100, 100a-100f) is rotatable by 180 degrees relative to a longitudinal axis (46, 46a) of the longitudinal beam (3, 3a-3d) and at least two supporting wheels (9a-9d) are rotatable from a first position (P₁) corresponding to an upper side (12, 12a, 12b) of the crossbeam (4, 4a-4f), to a second position (P₂) corresponding to an underside (13) of the crossbeam (4, 4a-4f).

6. Star wheel swather (100, 100a-100f) according to one of the preceding claims, **characterized in that** the pivot point (ALP, ALP₁, ALP₂) between the longitudinal beam (3, 3a-3d) and the crossbeam (4, 4a-4f) is formed by a swivel joint (33, 33a).

7. Star wheel swather (100, 100a-100f) according to one of the preceding claims, **characterized in that** the star wheel swather (100, 100a-100f) comprises a traverse beam (4c, 4d) with arms (38a, 38b, 41) which are foldable or retractable from an operating position into a transport position (200, 200a).

8. Star wheel swather (100, 100a-100f) according to one of the preceding claims, **characterized in that** on the crossbeam a rail (4, 4a-4f) is arranged (42), in which the L-shaped oscillating brackets (6n, 6o) are displaceble by means of a carriage (43a, 43b).

9. Star wheel swather (100, 100a-100f) according to one of the preceding claims, **characterized in that** the L-shaped oscillating brackets (6a-6p) are rotatable in a pivot bearing (37, 37a-37i), in a plane, which is aproximately parallel to an upper side (12b) of the crossbeam (4b).

10. Star wheel swather (100, 100a-100f) according to one of the preceding claims, **characterized in that** the star wheels (8a-8u) are arranged in at least one starwheel row (R₁, R₂) and at least every second star wheel (8a-8u) is removable and fastenable by means of an axial quick-release fastener(45a-45d).

11. Star wheel swather (100, 100a-100f) according to one of the preceding claims, **characterized in that** the star wheels (8u) are arranged with a positive camber (St+).

12. Star wheel swather (100, 100a-100f) according to one of the preceding claims, **characterized in that** the individual drives (7a-7p) are hydraulically driven.

13. Star wheel swather (100, 100a-100f) according to one of the preceding claims 1-11, **characterized in that** the individual drives (7a-7p) are electrically driven.

14. Star wheel swather (100, 100a-100f) according to one of the preceding claims 1-11, **characterized in that** the individual drives (7a-7p) are mechanically driven.

15. Star wheel swather (100, 100a-100f) according to one of the preceding claims 1-11, **characterized in that** the individual drives (7a-7p) are pneumatic driven.

16. Star wheel swather (100, 100a-100f) according to one of the preceding claims, **characterized in that** the star wheels (8a-8u) can be brought by means of an axial clutch, from a positive-drive position into a free-wheel position.

17. Method for composting mowing material (10, 10a) into swathes (11) respectively for the use of a star wheel swather (100, 100a-100f) according to one of the preceding claims 1-16, **characterized in that** the following process steps are carried out:
a) - connecting the star wheel swather (100, 100a-100f) to a front three-point mounting (2) of a tractor (1);
b) - if necessary, manually or hydraulically adjusting the star wheel swather (100, 100a-100f) from a transport position (200, 200a) into an operating position;
c) - selecting a working angle (W₁-W₅) between a longitudinal beam (3, 3a-3d) and a crossbeam (4, 4a-4f), for leftward or rightward delivery of the swath (11);
d) - if necessary, lifting the star wheel swather (100, 100a-100f) by actuating the three-point mounting bracket (2);
e) - if necessary, actuating a rotating device (32) which rotates the star wheel swather (100, 100a-100f) by 180 degrees about a longitudinal axis (46) of the longitudinal beam (3a);
f) - if necessary, swiveling of supporting wheels (9a-9d) in a vertical swivel joint (25) to an opposite side (13) of the crossbeam (4) and locking the support wheels (9a-9d) in this swivelled position (P₂) by actuating a locking device;
g) - if necessary, lowering the star wheel swather (100, 100a-100f) by actuating the three-point mounting bracket;
h) - adjusting the height of the support wheels (9a-9d) by actuating a threaded spindle (23) of the supporting device (5a-5d) ;
i) - if provided, actuating a clutch for switching the star wheels (8a-8u) from free-wheel to positive-drive;
j) - start driving the tractor (1).

18. Method for raking mowing material (10, 10a) into swathes (11) respectively for the use of a star wheel swather (100, 100a-100f) according to one of the preceding claims 1-16, **characterized in that** the following process steps are carried out:
a') - connecting the star wheel swather (100, 100a-100f) to a front three-point mounting (2) of a tractor (1);
b') - if necessary, manually or hydraulically adjusting the star wheel swather (100, 100a-100f) from a transport position (200, 200a) into an operating position;
c') - selecting a working angle (W₁-W₅) formed between a longitudinal beam (3, 3a-3d) and a crossbeam (4, 4a-4f), for leftward or rightward delivery of the swath (11);
d') - if necessary, lifting the star wheel swather (100, 100a-100f) by actuating threaded spindles (23) of supporting devices (5a-5d) or by actuating the three-point mounting bracket (2);
e') - if necessary, actuating a swivel joint (33, 33a) for changing the working angle (W₁-W₅) between the longitudinal beam (3, 3a-3d) and the crossbeam (4, 4a-4f);
f') - if necessary, detaching and removing those star wheels (8a-8u) fastened with a quick-release fastener (45a-45d) by opening the quick-release fasteners (45a-45d);
g') - if necessary, aligning or changing the angle of attack (W_{St}) of the star wheels (8a-8u) by actuating a particular pivot bearing (37, 37a-37i) on respective L-shaped oscillating bracket (6a-6p) of the star wheels (8a-8u);
h') - remounting the removed star wheels (8a-8u) by disengaging the star wheels (8a-8u) and closing the quick-release fasteners (45a-45d);
i') - if necessary, lowering the star wheel swather (100, 100a-100f) by actuating the three-point mounting bracket (2);
j') - adjusting the height of the support wheels (9a-9d) by actuating the threaded spindle (23) of the supporting device (5a-5d);
k') - if provided, actuating a clutch for switching the star wheels (8a-8u) from free-wheel to positive-drive;
l') - start driving the tractor (1).

## Revendications

1. Râteau-soleil (100, 100a-100f) pour le rassemblement dans un tas des biens fourragères (10, 10a) en andains (11), avec au moins une poutre longitudinale (3, 3a-3d) et au moins une poutre transversale (4, 4a-4f) qui forment l'une avec l'autre un point d'articulation (ALP, ALP₁, ALP₂) et un angle de travail (W₁-W₅) et où sur la poutre transversale (4, 4a-4f) sont montées de manière chevauchant au moins deux leviers en étoile (8a-8u), **caractérisé en ce que** chaque levier en étoile individuel (8a-8u) est disposé sur la poutre transversale (4, 4a-4f) au moyen d'un manche oscillant en forme de L (6a-6p), et chaque levier en étoile individuel (8a-8u) est actionné par un entraînement individuel (7a-7p).

2. Râteau-soleil (100, 100a-100f) selon la revendication 1, **caractérisé en ce que** les entraînements individuels (7a-7p) sont variables et contrôlables individuellement.

3. Râteau-soleil (100, 100a-100f) selon l'une des revendications précédentes, **caractérisé en ce que** les manches oscillants en forme de L (6a-6p) sont supportés par ressort.

4. Râteau-soleil (100, 100a-100f) selon l'une des revendications précédentes, **caractérisé en ce que** le râteau-soleil (100, 100a-100f) comprends au moins deux dispositifs de support (5a-5d) avec des roues de support (9a-9d) qui sont réglables en hauteur au moyen d'un réglage de la hauteur (22).

5. Râteau-soleil (100, 100a-100f) selon la revendication 4, **caractérisé en ce que** le râteau-soleil (100, 100a-100f) est pivotant à 180 degrés autour d'un axe longitudinal (46, 46a) de la poutre longitudinale (3, 3a-3d) et les au moins deux roues de support (9a-9d) peuvent pivoter à rotation complète d'une première position (P₁) correspondant à un côté supérieur (12, 12a, 12b) de la poutre transversale (4, 4a-4f) à une seconde position (P₂) correspondant à un côté inférieur (13) de la poutre transversale (4, 4a-4f).

6. Râteau-soleil (100, 100a-100f) selon l'une des revendications précédentes, **caractérisé en ce que** le point d'articulation (ALP, ALP₁, ALP₂) entre la poutre longitudinale (3, 3a-3d) et la poutre transversale (4, 4a-4f) est formé par un joint pivotant (33, 33a).

7. Râteau-soleil (100, 100a-100f) selon l'une des revendications précédentes, **caractérisé en ce que** le râteau-soleil (100c, 100d) comprends une poutre transversale (4c, 4d) avec des bras (38a, 38b, 41) qui sont pliables ou rétractables d'une position de fonctionnement à une position de transport (200, 200a).

8. Râteau-soleil (100, 100a-100f) selon l'une des revendications précédentes, **caractérisé en ce que** sur la poutre transversale (4, 4a-4f) est disposée une barre (42), dans laquelle les manches oscillants en forme de L (6n, 6o) sont coullisants au moyen d'un chariot (43a, 43b).

9. Râteau-soleil (100, 100a-100f) selon l'une des revendications précédentes, **caractérisé en ce que** le manche oscillant en forme de L (6a-6p) peut pivoter à rotation complète dans un palier pivotant (37, 37a-37i) dans un plan qui est approximativement parallèle avec une face supérieure (12b) de la poutre transversale (4b).

10. Râteau-soleil (100, 100a-100f) selon l'une des revendications précédentes, **caractérisé en ce que** les leviers en étoile (8a-8u) sont disposés dans au moins une rangée de levier en étoile (R₁, R₂) et au moins chaque deuxième levier en étoile (8a-8u) est démontable et fixable au moyen d'une attache axiale à action rapide (45a-45d).

11. Râteau-soleil (100f) selon l'une des revendications précédentes, **caractérisé en ce que** les leviers en étoile (8u) sont disposés avec un linteau positif (St+).

12. Râteau-soleil (100, 100a-100f) selon l'une des revendications précédentes, **caractérisé en ce que** les entraînements individuels (7a-7p) sont entraînés hydrauliquement.

13. Râteau-soleil (100, 100a-100f) selon l'une des revendications précédentes 1-11, **caractérisé en ce que** les entraînements individuels (7a-7p) sont entraînés électriquement.

14. Râteau-soleil (100, 100a-100f) selon l'une des revendications précédentes 1-11, **caractérisé en ce que** les entraînements individuels (7a-7p) sont entraînés mécaniquement.

15. Râteau-soleil (100, 100a-100f) selon l'une des revendications précédentes 1-11, **caractérisé en ce que** les entraînements individuels (7a-7p) sont entraînés pneumatiquement.

16. Râteau-soleil (100, 100a-100f) selon l'une des revendications précédentes, **caractérisé en ce que** les leviers en étoile (8a-8u) peuvent être amenés d'une position d'entraînement forcé en position de roue libre au moyen d'un accouplement axial.

17. Procédé pour le rassemblement de la récolte dans un tas des biens fourragères (10, 10a) en andains (11) respectivement pour l'utilisation d'un râteau-soleil (100, 100a-100f) selon l'une des revendications 1-16 précédentes, **caractérisé en ce que** les étapes suivantes du procédé doivent être réalisées:
a) - raccordement du râteau-soleil (100, 100a-100f) à un support antérieur de fixation à trois points (2) d'un tracteur (1);
b) - si nécessaire, réglage manuelle ou hydraulique du râteau-soleil (100, 100a-100f) d'une position de transport (200, 200a) dans une position de fonctionnement;
c) - sélection d'un angle de travail (W₁-W₅) formé entre une poutre longitudinale (3, 3a-3d) et une poutre transversale (4, 4a-4f) pour le dépôt vers la gauche ou vers la droite de l'andain (11);
d) - si nécessaire, levée du râteau-soleil (100, 100a-100f) par actionnement du support de fixation à trois points (2);
e) - si nécessaire, actionnement d'un dispositif rotatif (32) qui fait tourner le râteau-soleil (100a) 180 degrés autour d'un axe longitudinal (46) de la poutre longitudinale (3a);
f) - si nécessaire, pivotement des roues de support (9a-9d) dans un joint de pivotement vertical (25) à un côté opposé (13) du support transversal (4) et blocage des roues de support (9a-9d) dans cette position de pivotement (P₂) par actionnement d'un dispositif de blocage;
g) - si nécessaire, abaisse du râteau-soleil (100, 100a-100f) par actionnement du support de fixation à trois points (2);
h) - réglage en hauteur des roues de support (9a-9d) par actionnement d'un axe fileté (23) aux dispositifs de support (5a-5d);
i) - s'il est prévu, actionnement d'un accouplement pour commuter les leviers en étoile (8a-8u) de la position de roue libre en position d'entraînement forcé;
j) - partir avec le tracteur (1).

18. Procédé pour le rassemblement de la récolte dans un tas des biens fourragères (10, 10a) en andains (11) respectivement pour l'utilisation d'un râteau-soleil (100, 100a-100f) selon l'une des revendications précédentes 1-16, **caractérisé en ce que** les étapes suivantes du procédé doivent être réalisées:
a') - raccordement du râteau-soleil (100, 100a-100f) à un support antérieur de fixation à trois points (2) d'un tracteur (1) ;
b') - si nécessaire, réglage manuelle ou hydraulique du râteau-soleil (100, 100a-100f) d'une position de transport (200, 200a) dans une position de fonctionnement;
c') - sélection d'un angle de travail (W₁-W₅) formé entre une poutre longitudinale (3, 3a-3d) et une poutre transversale (4, 4a-4f) pour le dépôt vers la gauche ou vers la droite de l'andain (11);
d') - si nécessaire, levée du râteau-soleil (100, 100a-100f) par actionnement d'axe fileté (23) aux dispositifs de support (5a-5d) ou par actionnement du support de fixation à trois points (2);
e') - si nécessaire, actionnement d'un joint pivotant (33, 33a) pour changer l'angle de travail (W₁-W₅) entre la poutre longitudinale (3, 3a-3d) et la poutre transversale (4, 4a-4f);
f') - si nécessaire, déblocage et enlèvement de ceux leviers en étoile (8a-8u) qui sont fixés par une attache axiale à action rapide (45a-45d) par ouvrèrent de l'attache axiale à action rapide (45a-45d).
g') - si nécessaire, ajustage ou changement de l'angle d'attaque (W_{St}) des leviers en étoile (8a-8u) par actionnement du palier pivotant respectif (37, 37a-37i) au manche oscillant en forme de L respectif (6a-6p) du levier en étoile (8a-8u);
h') - remontage des leviers en étoile (8a-8u) enlevés par positionnement des leviers en étoile (8a-8u) et par fermeture de l'attache axiale à action rapide (45a-45d);
i') - si nécessaire, abaisse du râteau-soleil (100, 100a-100f) par actionnement du support de fixation à trois points (2);
j') - réglage en hauteur des roues de support (9a-9d) par actionnement d'un axe fileté (23) aux dispositifs de support (5a-5d);
k') - s'il est prévu, actionnement d'un accouplement pour commuter les leviers en étoile (8a-8u) de la position de roue libre en position d'entraînement forcé;
l') - partir avec le tracteur (1).
